# EUROPÄISCHE PATENTSCHRIFT

(11) **EP 2 228 891 B1**
(45) Veröffentlichungstag und Bekanntmachung des Hinweises auf die Patenterteilung: **01.04.2020**
(21) Anmeldenummer: 10001072.7
(22) Anmeldetag: 03.02.2010
(51) Int. Cl.: H02K 7/06, F04D 29/042

(54) **Elektromotor zum Betätigen eines Ventils**
Electric motor for actuating a valve
Moteur électrique destiné à actionner une soupape

(30) Priorität: 10.03.2009 DE 102009011946
(43) Veröffentlichungstag der Anmeldung: 15.09.2010
(73) Patentinhaber: WILO SE, 44263 Dortmund (DE)
(72) Erfinder: Strelow, Günter, 44801 Bochum (DE)
(74) Vertreter: Cohausz, Helge B.

(56) Entgegenhaltungen:
- EP-A1- 1 767 788
- EP-A2- 1 293 678
- DE-A1- 2 510 787
- DE-A1- 10 115 989
- DE-U1- 9 319 309
- US-A- 1 955 549
- US-A- 3 292 549
- US-A- 3 329 095

## Beschreibung

Die Erfindung betrifft einen Elektromotor mit einer Motorenwelle, die durch den Motorenrotor axial beweglich ist und hierdurch insbesondere das Stellglied eines Ventils betätigt.

Es ist bekannt, das Stellglied eines Ventils durch einen Elektromotor zu betätigen, indem der Motorenrotor auf der Motorenwelle über ein Gewinde gelagert ist, so dass in einer Rotorendrehrichtung die Welle in einer axialen Richtung und in der anderen Drehrichtung in die entgegengesetzte axiale Richtung verschoben wird, um das Ventilstellglied zu öffnen und zu schließen. Hierbei bleibt der Rotor stets in derselben mittigen axialen Lage innerhalb des Stators.

Ferner ist aus der EP 1 293 678 A1 bekannt, auf der Welle eines Elektromotors ein Pumpenlaufrad über ein Gewinde zu lagern, wobei das Pumpenlaufrad zusätzlich als Ventilstellglied wirkt und in einer Wellendrehrichtung in eine axiale Lage gebracht wird, in der es den Pumpeneinlass verschließt und in der anderen Wellendrehrichtung das Ventil öffnet. Eine definierte überwindbare Zuhalterkraft kann hierbei auf das Ventilstellglied nicht ausgeübt werden, so dass auch nicht die Wirkung eines Überdruck- oder Rückschlagventils (Rückflussverhinderer) erreichbar ist.

Weiterhin ist aus der DE 101 15 989 A1 (Verwendung zur Abgrenzung nach der zweiteiligen Form von Anspruch 1) bekannt, eine Ventilfunktion über das Verschieben des Rotors gegenüber dem Stator zu realisieren.

Aufgabe der Erfindung ist es, einen ein Ventil betätigenden Elektromotor der eingangs genannten Art so zu verbessern, dass das Ventilstellglied in der Schließstellung voreinstellbar belastbar ist, bei einfacher Konstruktion und hoher Funktionssicherheit. Auch ist es Aufgabe der Erfindung, ein kostengünstiges, wartungsfreies Ventil zu entwickeln, das auf eine Großserienfertigung unter Nutzung des bestehenden drehzahlgeregelten Kleinpumpenantriebs als Actor ausgerichtet ist.

Diese Aufgaben werden erfindungsgemäß dadurch gelöst, dass der Rotor gegenüber dem Stator axial beweglich ist und hierdurch zu einem Teil aus dem Feld des Stators gelangt.

Die zusätzliche axiale Bewegung des Motorenrotors teilweise aus dem Statorfeld heraus wird dazu genutzt, eine axiale federnde Kraft auf das Ventilstellglied auszuüben. Auf den aus dem Feld des Stators axial teilweise herausgeschobene Rotor wird eine durch das Feld in die Mittellage zurück bewegende Kraft ausgeübt als federnde Kraft, so dass das Ventilstellglied mit einer federnden Kraft zugehalten wird und ab einem bestimmten, am Ventilstellglied anliegenden Flüssigkeitsdruck sich öffnet.

Damit wird eine bestimmte ausreichende Schließkraft des Ventils erzeugt. Durch die Größe des Versatzes zwischen Rotormagnet und dem Statorrückschlussring, kann eine definierte Schließkraft eingestellt werden. Eine Gefahr des Verklemmens des Ventilkegels kann damit verringert werden. Da die magnetischen Kräfte wie eine Feder wirken, kann das Ventil bei Bedarf die Funktion eins Überdruckventils übernehmen.

Es wird eine kompakte Baueinheit bei reduzierten Herstellung- und Installationskosten erreicht. Durch Integration der Funktion in die Pumpe entfällt ein zusätzliches Ventil. Die damit mögliche kompakte Baueinheit reduziert die Installations- und Herstellkosten.

Die Pumpe wird durch einen EC-Motor mit Permanentmagnetrotor angetrieben. Aufgrund der magnetischen Kräfte zwischen dem Rotormagnet und dem Statorpaket wird der Rotor axial mittig unter das Statorpaket gezogen. Hier heben sich die axialen wirkenden magnetischen Kräfte gegenseitig auf. Um sicherzustellen, dass das Axiallager in allen Betriebspunkten der Pumpen sicher anliegt, wird vielfach ein kleiner Axialversatz eingestellt. Der Pumpenantrieb ist Stellantrieb für das Ventil. Damit ist keine weitere Antriebsquelle erforderlich. Das Ventil kann unabhängig von den hydraulischen Gegebenheiten im System geöffnet bzw. geschlossen werden. Drosselverluste hervorgerufen durch separat eingebaute Ventile entfallen. Zum Verstellen des Ventils werden die durch den Versatz entstehenden Axialkräfte genutzt. Das Öffnen und Schließen des Ventil wird hierbei durch einen Wechsel der Drehrichtung des Motors erreicht. Das Laufrad, Teile des Laufrades oder Teile der Welle können hierbei als Ventilteller ausgeführt werden. Durch die Größe des Versatzes zwischen Rotormagnet und dem Statorrückschlussring, kann eine definierte Schließkraft eingestellt werden. Eine Gefahr des Verklemmens des Ventilkegels kann damit verringert werden. Da die magnetische Kraft wie eine Feder wirkt, kann das Ventil bei Bedarf die Funktion eines Überdruckventils übernehmen.

Vorteilhafte Ausgestaltungen der Erfindung sind in den Unteransprüchen aufgeführt.

Ein Ausführungsbeispiel ist in den Zeichnungen dargestellt und wird im Folgenden näher beschrieben. Es zeigen
- Figur 1: das Ventil im geöffneten Zustand,
- Figur 2: das Ventil im geschlossenen Zustand.

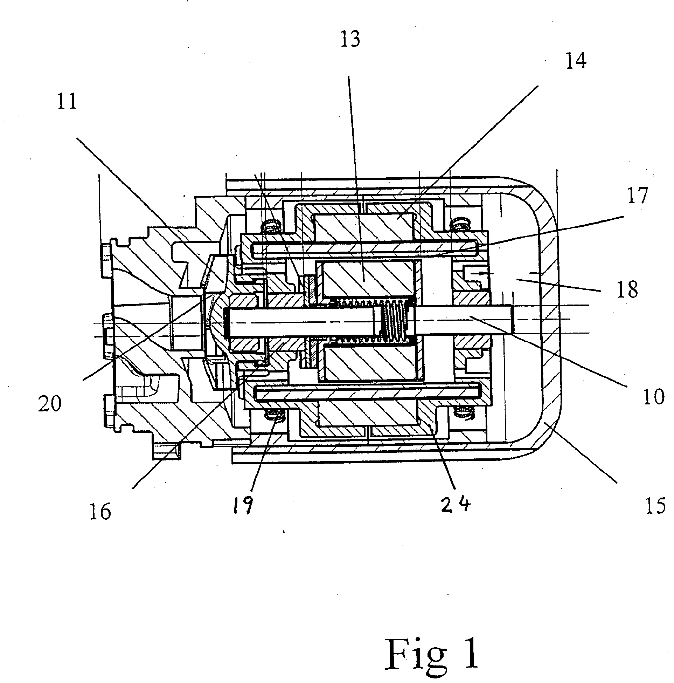

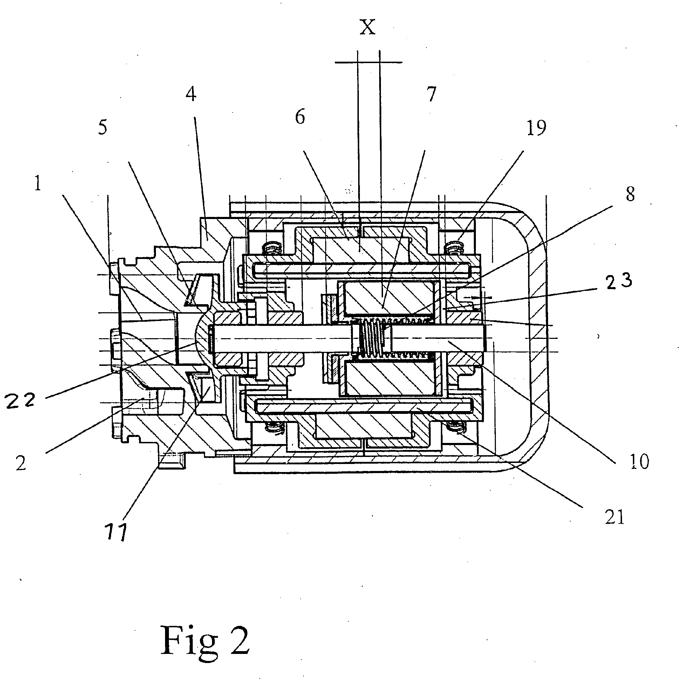

Figur 1 und Figur 2 zeigen ein Ausführungsbeispiel einer Kreiselpumpe mit Pumpengehäuse 4, Spaltrohr 17 und integriertem Ventil 22. Der Antrieb der Pumpe ist ein Elektromotor mit eine Motorkammer 18 aufweisendem Motorgehäuse 15 und einem Magnetläufer. Der Motorstator ist von einem Innengehäuse 24 umgeben, das über Federelemente 19 sich innen am Motorgehäuse 15 abstützt.

Der Elektromotor weist ein Wicklung 21, ein Statorpaket 6 und einen Rotor 10,13 auf. Im Betrieb der Pumpe ist der Versatz X zwischen dem Rotormagneten 7 und dem Statorpaket 6 sehr klein bzw 0. Es wirken keine bzw nur geringe Kräfte in axialer Richtung auf den Rotor. Wenn das Ventil geschlossen werden soll, wird der Motor gestoppt. Anschließend wird die Drehrichtung geändert. Der Rotor wird sich, entsprechend des vom Stator erzeugten Drehfeldes, bewegen. Die auf das Pumpenlaufrad 11 wirkenden hydraulischen Kräfte wirken in die entgegengesetzte Richtung. Da das Laufrad 11 mit der Welle 10 verbunden ist, wird diese daran gehindert, der Drehbewegung des Rotormagneten 7 zu folgen.

In dem ausgeführten Beispiel ist das Rotorpaket 13 über ein Gewinde insbesondere über eine schraubenförmige Spindel 8 mit der Welle 10 verbunden. Aufgrund der unterschiedlichen Drehbewegungen zwischen Rotorpaket 13 und Welle 10 werden sich diese gegeneinander axial verschieben. Das Rotorpaket bewegt sich dabei axial aus der Mittellage zum Stator. Die sich daraus ergebende Axialkraft bewirkt, dass sich die Welle in entgegengesetzter Richtung bewegt. Der sich an der Welle 10 und/oder am Laufrad 11 befindliche Ventilteller 22 wird in die Ventildichtung 5 gedrückt. Das Ventil ist geschlossen. Der Rotor dreht sich solange weiter bis durch den axialen Versatz eine definierte Schließkraft erreicht ist.

Um das Ventil zu öffnen, wird die Drehrichtung wieder geändert. Durch die Spindel 8 wird die Welle 10 in das Rotorpaket 13 hineingezogen. Die axiale Bewegung des Rotorpakets wird durch ein Axiallager 16 begrenzt. Der Ventilteller 22 wird aus dem Ventilsitz 5 herausgezogen. Das Ventil ist geöffnet. Die Pumpe kann das Medium fördern.

Die Fig. 1 zeigt das Ventil im geöffneten Zustand. Der Querschnitt 20 zum Laufrad 11 der Pumpe ist frei. Die Strömungswege 1, 2 sind geöffnet, die Pumpe kann das Medium durch den Saugkanal 1 durch das Laufrad 11 in den Druckkanal 2 pumpen.

Die Fig. 2 zeigt das Ventil im geschlossenen Zustand. Der Querschnitt 20 ist versperrt. Die Strömungswege 1, 2 sind in beide Richtungen unterbrochen. Die Schließkraft in Strömungsrichtung der Pumpe ist abhängig von den magnetischen Kräften hervorgerufen durch den Versatz X des Rotors 10, 13 zum Stator 14. Dies kann so eingestellt werden, dass das Ventil ab Überschreitung eines bestimmten Differenzdruckes zwischen Kanal 1 und 2 automatisch öffnet.

Wenn der Rotor 13 teilweise aus dem Stator 14 heraus bewegt ist, besteht auf der der Pumpe abgewandten Seite ein Freiraum 23, der eine weitere begrenzte axiale Bewegung des Rotors aus dem Stator heraus ermöglicht, die durch das Ventilstellglied 22 insbesondere bei Überdruck erzeugbar ist.

In nicht dargestellten Alternativen sind ein oder mehrere Teile des Laufrades 11 insbesondere ein als Ventilteller arbeitendes Teil über ein Getriebe insbesondere ein Gewinde auf oder an der Welle 10 gelagert.

## Patentansprüche

1. Elektromotor mit einer Motorenwelle (10), die durch den Motorenrotor (13) axial beweglich ist und hierdurch insbesondere das Stellglied (22) eines Ventils betätigt, wobei der Rotor (13) gegenüber dem Stator (14) axial beweglich ist und hierdurch zu einem Teil aus dem Feld des Stators gelangt,
**dadurch gekennzeichnet, dass** zwischen Welle (10) und Rotor bzw. Rotorpaket (13) ein Getriebe (8) angeordnet ist, das eine axiale Bewegung des Rotors (13) gegenüber der Welle (10) und/oder eine axiale Bewegung der Welle gegenüber dem Rotor ermöglicht.

2. Elektromotor nach Anspruch **1, dadurch gekennzeichnet, dass** in einer ersten Drehrichtung der Rotor (13) in seiner mittleren Stellung im Stator (14) verbleibt und das Ventilstellglied (22) über die Welle (10) in eine erste Position insbesondere in die Offenstellung zieht, und dass in der zweiten Drehrichtung der Rotor (13) sich aus der mittleren Stellung teilweise aus dem Stator (14) axial herausbewegt und die Welle (10) in die entgegengesetzte Richtung axial bewegt und damit das Ventilstellglied (22) über die Welle in die zweite Position insbesondere in die Schließstellung bewegt.

3. Elektromotor nach Anspruch 2, **dadurch gekennzeichnet, dass** in der Stellung teilweise aus dem Stator (14) heraus der Rotor (13) einen Freiraum (23) besitzt, der eine weitere begrenzte axiale Bewegung des Rotors aus dem Stator heraus ermöglicht, die durch das Ventilstellglied (22) insbesondere bei Überdruck erzeugbar ist.

4. Elektromotor nach einem der vorherigen Ansprüche, **dadurch gekennzeichnet, dass** das Ventilstellglied (22) vor einem Laufrad (11) einer Kreiselpumpe gebildet oder mit dem Laufrad einer Kreiselpumpe verbunden ist, wobei das Laufrad von der Welle (10) des Motors angetrieben ist.

5. Elektromotor nach Anspruch 4, **dadurch gekennzeichnet, dass** in der geschlossenen Stellung des Ventils (22) der zentrale Bereich des Laufrades (11) die Einlassöffnung der Pumpenkammer verschließt.

6. Elektromotor nach Anspruch 4, **dadurchge kennzeichnet,** dass das Laufrad (11) der Pumpe über ein Getriebe (8) auf oder an der Welle (10) gelagert ist.

7. Elektromotor nach einem der Ansprüche 4 bis 6, **dadurch gekennzeichnet, dass** ein oder mehrere Teile des Laufrades (11) insbesondere ein als Ventilteller (22) arbeitendes Teil über ein Getriebe auf oder an der Welle (10) gelagert ist/sind.

8. Elektromotor einem der vorherigen Ansprüche, **dadurch gekennzeichnet, dass** das Getriebe (8) ein Gewinde ist, insbesondere eine Spindel.

## Claims

1. Electric motor having a motor shaft (10) which by the motor rotor (13) is axially movable and, on account thereof, activates in particular the actuator (22) of a valve, wherein the rotor (13) is movable axially in relation to the stator (14) and, on account thereof, is partially moved out of the field of the stator, **characterized in that** a gearbox (8) which enables an axial movement of the rotor (13) in relation to the shaft (10), and/or an axial movement of the shaft in relation to the rotor, is disposed between the shaft (10) and the rotor, or the rotor lamination (13), respectively.

2. Electric motor according to Claim 1, **characterized in that** the rotor (13) in a first rotation direction remains in the central position thereof in the stator (14) and by way of the shaft (10) pulls the valve actuator (22) to a first position, in particular the opened position, and **in that** the rotor (13) in the second rotation direction moves from the central position axially partially out of the stator (14) and moves the shaft (10) axially in the opposite direction and thus by way of the shaft moves the valve actuator (22) to the second position, in particular the closed position.

3. Electric motor according to Claim 2, **characterized in that** the rotor (13) in the position partially moved out of the stator (14) has a clearance (23) which enables a further limited axial movement of the rotor out of the stator, said further limited axial movement being capable of being generated by the valve actuator (22), in particular at positive pressure.

4. Electric motor according to one of the preceding claims, **characterized in that** the valve actuator (22) is formed in front of an impeller (11) of a centrifugal pump, or is connected to the impeller of a centrifugal pump, wherein the impeller is driven by the shaft (10) of the motor.

5. Electric motor according to Claim 4, **characterized in that** the central region of the impeller (11) in the closed position of the valve (22) shuts off the inlet opening of the pump chamber.

6. Electric motor according to Claim 4, **characterized in that** the impeller (11) of the pump is mounted on or to the shaft (10) by way of a gearbox (8).

7. Electric motor according to one of Claims 4 to 6, **characterized in that** one or a plurality of parts of the impeller (11), in particular a part operating as a valve disc (22), is/are mounted on or to the shaft (10) by way of a gearbox.

8. Electric motor according to one of the preceding claims, **characterized in that** the gearbox (8) is a thread, in particular a spindle.

## Revendications

1. Moteur électrique comprenant un arbre de moteur (10) qui est mobile axialement à travers le rotor de moteur (13) et qui actionne ainsi notamment l'élément de commande (22) d'une soupape, le rotor (13) étant mobile axialement par rapport au stator (14) et sort ainsi en partie du champ du stator,
**caractérisé en ce que**
une transmission (8) est disposée entre l'arbre (10) et le rotor ou l'ensemble rotor (13) et déplace axialement le rotor (13) par rapport à l'arbre (10) et/ou permet un mouvement axial de l'arbre par rapport au rotor.

2. Moteur électrique selon la revendication 1, **caractérisé en ce que**, dans un premier sens de rotation, le rotor (13) reste dans sa position centrale dans le stator (14) et tire l'élément de commande de soupape (22) par le biais de l'arbre (10) jusque dans une première position, notamment dans la position ouverte, et **en ce que**, dans le deuxième sens de rotation, le rotor (13) quitte axialement la position centrale et sort partiellement du stator (14) et déplace l'arbre (10) axialement jusque dans la direction opposée et déplace donc l'élément de commande de soupape (22) par le biais de l'arbre jusque dans la deuxième position en particulier dans la position fermée.

3. Moteur électrique selon la revendication 2, **caractérisé en ce que**, dans la position partiellement sortie du stator (14), le rotor (13) possède un espace libre (23) qui permet un mouvement axial supplémentaire limité du rotor hors du stator qui peut être généré par l'élément de commande de soupape (22) notamment en cas de surpression.

4. Moteur électrique selon l'une des revendications précédentes, **caractérisé en ce que** l'élément de commande de soupape (22) est formé en avant d'une roue mobile (11) d'une pompe centrifuge ou est relié à la roue mobile d'une pompe centrifuge, la roue mobile étant entraînée par l'arbre (10) du moteur.

5. Moteur électrique selon la revendication 4, **caractérisé en ce que**, dans la position fermée de la soupape (22), la région centrale de la roue mobile (11) ferme l'ouverture d'entrée de la chambre de pompe.

6. Moteur électrique selon la revendication 4, **caractérisé en ce que** la roue mobile (11) de la pompe est montée par le biais d'une transmission (8) sur ou contre l'arbre (10).

7. Moteur électrique selon l'une des revendications 4 à 6, **caractérisé en ce qu'**au moins une partie de la roue mobile (11), notamment une partie faisant office de tête de soupape (22), est montée sur ou contre l'arbre (10) par le biais d'une transmission.

8. Moteur électrique selon l'une des revendications précédentes, **caractérisé en ce que** la transmission (8) est un filetage, notamment une broche.
